**Europäisches Patentamt**

**European Patent Office**

**Office européen des brevets**

(19)

(11) Publication number : **0 476 942 A2**

# (12) EUROPEAN PATENT APPLICATION

(21) Application number : **91308401.8**

(22) Date of filing : **13.09.91**

(51) Int. Cl.⁵ : **C08L 33/06, C08L 51/00,**
**// (C08L33/06, 27:16, 51:00)**

(30) Priority : **18.09.90 US 584279**
**12.08.91 US 743841**

(43) Date of publication of application :
**25.03.92 Bulletin 92/13**

(84) Designated Contracting States :
**AT BE CH DE DK ES FR GB GR IT LI LU NL SE**

(71) Applicant : **ROHM AND HAAS COMPANY**
**Independence Mall West**
**Philadelphia Pennsylvania 19105 (US)**

(72) Inventor : **Post, Robert Lee**
**980 Almhouse Road**
**Ivyland, Pennsylvania 18974 (US)**
Inventor : **Rapacki, Steven Richard**
**510 Ashton Circle**
**Langhorne, Pennsylvania 19053 (US)**
Inventor : **Memon, Nazir Ahmed**
**980 Almhouse Road**
**Ivyland, Pennsylvania 18974 (US)**

(74) Representative : **Angell, David Whilton et al**
**ROHM AND HAAS (UK) LTD. European**
**Operations Patent Department Lennig House**
**2 Mason's Avenue**
**Croydon CR9 3NB (GB)**

(54) Resin compositions.

(57) A resinous composition, particularly suited for forming a surface layer, with excellent weathering properties, of a composite which includes an underlying layer of PVC, ABS or other structural plastic, comprises a vinylidene fluoride polymer/methyl methacrylate polymer matrix and, dispersed thereth-rough, discrete particles of acrylate-based hard-core impact modifier resin.

EP 0 476 942 A2

This invention is concerned with resin compositions which can be used as capstock and in other applications, in particular with resin compositions which are useful for coextrusion over, or lamination to, structural plastics such as poly(vinyl chloride), as well as with the manufacture of such composites and to the articles produced therefrom.

Poly(vinyl chloride) resin (hereafter "PVC") has a combination of properties which make it particularly suitable for use as a structural material. In applications in which impact strength of the structural plastic is important, the PVC can be formulated with impact-modifier resins which improve the impact strength of the resulting composition. Such high impact-strength PVC compositions can be readily extruded or otherwise formed into a variety of articles which have excellent impact strength, toughness and other desired mechanical and chemical properties; for example siding for buildings, shutters, technical profiles for window and door frames, rain carrying systems, and fencings.

Such PVC compositions however have relatively poor weatherability characteristics, particularly poor color retention in darker grade colors, for example, browns and blues. The color is imparted to the PVC composition for example by the use of colorants such as pigments or dyes but sunlight causes unappealing changes in the colors which are more severe for darker than for light colors.

An attempted remedy is to incorporate into the PVC composition stabilizing additives, for example, UV absorbers, thermal stabilizers and titanium dioxide which yield improvement which are not sufficiently significant to meet industry-wide standards.

Another attempted remedy is to apply another resinous material over the PVC structural plastic to provide a surface that can withstand sunlight and other environmental conditions. Such a surfacing material is called "capstock". The capstock generally is much thinner than the structural plastic, typically being about 10 to about 25% of the total thickness of the composite (i.e. the capstock and structural plastic plies). A typinical thickness of capstock can be about 0.2 to about 2.5 mm thick whereas the structural plastic ply can be about 0.75 to about 10 mm thick.

The composite can be formed, for example, by laminating preformed sheets or films of the PVC structural plastic and the capstock can be laminated together, either by thermal fusion or by adhesive. Alternatively, the PVC and capstock can be coextruded, with feedblock coextrusion often being preferred, to form a sheet of the composite which can be thermoformed into articles such as siding and shutters. Alternatively, multi-manifold dies can be used for forming coextruded technical profiles which can then be cut and welded to produce frames for windows and doors.

The capstock material must have a certain combination of processing properties and other physical, chemical, and aesthetic properties, for it to be suitable, including exceptional weathering characteristics, including excellent color retention, and it also must not affect adversely those properties which make PVC such a widely used building material.

Various types of resinous compositions have been disclosed for use as capstock, including poly(vinyl halide)-based compositions and acrylic resin-based compositions.

U.S.-A-4,166,081 discloses graft copolymers, including a copolymer prepared from styrene and acrylonitrile and an ethylene-propylene bipolymer, which are described as having high impact stength and outstanding thermal stability. It has been reported that compositions within the scope of the description of this patent have been used as capstock for PVC.

U.S.-A- 4,169,180 discloses a composite comprising an underlying ply made from a resin, such as PVC, which tends to be affected adversely by outdoor exposure and a protective surface ply comprising a resin prepared by sequential polymerization and comprising a crosslinked acrylate and/or methacrylate segment, a crosslinked styrene-acrylonitrile segment, and an uncrosslinked styrene-acrylonitrile segment.

U.S.-A- 4,183,777 discloses a PVC-based capstock for PVC structural plastic. The capstock comprises a major amount of a vinyl chloride polymer and minor amounts of titanium dioxide and a plasticizer, for example, a phthalate plasticizer.

U.S. -A-4,229,549 discloses a resin composition which is described as having excellent weathering durability and excellent impact strength. The composition comprises 70 to 97 wt.% of a rigid thermoplastic resin such as PVC and 3 to 30 wt.% of an elastic alkyl acrylate copolymer prepared from 60 to 99.5 wt.% of an alkyl acrylate, 0.1 to 10 wt.% of a polyfunctional monomer having one or more conjugated double bonds and one or more non-conjugated double bonds and, optionally, up to 35 wt.% of a comonomer. Examples of the latter two monomers are octatrienes and 1,3-butadienes respectively. The resin composition is recommended for use as the outer layer of a multi-layer molded product.

U.S.-A- 4,511,695 also discloses an acrylic resin-based graft copolymer which can be used as capstock which is said to have increased resistance to aging and better resistance to chemical solvents. This patent refers to laminates prepared from a film of the aforementioned copolymer laminated to a layer of a material comprising an ABS-PVC mixture.

Capstocks formed from the aforementioned resinous compositions generally have poor weather resistance with regard to initial color retention. Some have disadvantages in reprocessing of trimmings and the like for the purpose of conserving material and realizing economies. Some exhibit poor miscibility with resinous compositions comprising the structural plastic ply of the composite. This makes it difficult to recycle and re-use trimmings.

We have now found that resinous compositions comprising: (1) a continuous phase matrix portion which comprises (a) from about 3 to about 12 wt.% of poly(vinylidene fluoride) and (b) from about 25 to 55 wt.% of thermoplastic methacrylic resin having a molecular weight of at least 80,000 daltons and comprising poly(methyl methacrylate) or a copolymer of methyl methacrylate with $(C_1$ to $C_4)$-alkyl acrylate; and, dispersed in the matrix portion of the composition, (2) from 40 to about 65 wt.% of discrete particles of acrylate-based, hard core, impact modifier resin, are useful to form a variety of articles, including articles which are transparent and which have good impact strength and good weatherability characteristics. A few examples of such articles include signs, glazing, skylights, and signal light lenses.

Furthermore we have found that resinous compositions comprising:

(A) from about 35 to about 45 wt.% of a matrix portion comprising:
(1) from about 15 to about 25 wt.% of poly(vinylidene fluoride) resin (PVdF); and
(2) from about 75 to about 85 wt.% of a thermoplastic methacrylic resin having a molecular weight of at least about 80,000 daltons, and selected from the group consisting of methyl methacrylate resin and a copolymer of methyl methacrylate and a $(C_1$ to $C_4)$-alkyl acrylate; and

(B) from about 55 to about 65 wt.% of an acrylate-based, hard core, impact-modifier resin in the form of discrete particles; wherein the resins of (A)(1) and (A)(2) constitute a continuous phase in which are dispersed the resin particles of (B) above, are useful as capstock.

In preferred form, the PVdF constituent of the composition of the present invention comprises a homopolymer of vinylidene fluoride and the methacrylic resin is a copolymer of methyl methacrylate and a $(C_1$ to $C_4)$-alkyl acrylate, in particular, a copolymer prepared by polymerizing a major amount of methyl methacrylate with a minor amount of lower alkyl acrylate, most preferably ethyl acrylate, with the molecular weight of the copolymer being from about 80,000 to about 130,000 daltons or higher, more preferably, from about 90,000 to about 120,000 daltons.

By "molecular weight" we mean weight average molecular weight. Molecular weight which may be estimated by conventional gel permeation chromatographic methods, using poly (methyl methacrylate) standards for calibration. The term "dalton" means atomic mass unit.

In preferred form, the acrylate-based, hard core, impact-modifier resin constituent comprises multi-layered resin particles of the type described in U.S.-A-3,793,402.

The invention also extends to (a) capstock and other articles formed from a composition of the invention, including, for example, sheets, films, and plastic composites formed from the composition of this invention and overlying and integrally bonded to an underlying structural plastic ply, especially a ply formed from PVC, and (b) methods for forming a plastic composite comprising a surfacing material formed from a composition of the invention and an underlying plastic material, particularly PVC. The preferred method (b) feedblock coextrusion when a sheet or sheet-like product is desired and multi-manifold die coextrusion for a technical profile having a complex shape.

Articles can be formed from the composition of the invention having excellent weather-resistant characteristics, (including color retention, which may be achieved in compositions formulated from light or dark colorants) excellent chemical resistance ruder stress and stability (resists being degraded) at relatively high temperatures, for example, 232 to 260°C (450 to 500°F) or higher. This enables the composition to be processed and used effectively in applications where other compositions could not be used satisfactorily because of their heat sensitivity. Other advantages which may be achieved are improved economics and improved re-processability. As to improved reprocessability, compositions of the invention can exhibit good compatability when combined with PVC substrate materials in recycling which involves regrinding of such materials and reextrusion.

In the practice of this invention, the PVdF constituent is a thermoplastic polymer of the type widely utilized in the production of plastic articles. By "poly(vinylidene fluoride) resin" or "PVdF", as used herein, we mean homopolymer or copolymer of vinylidene fluoride which is miscible with the methacrylic resin constituent of the matrix. In the case of a copolymer of vinylidene fluoride, it is preferred that the vinylidene fluoride content comprise at least about 90 wt.% of the copolymer. The PVdF constituent can comprise a mixture of a homopolymer and one or more copolymers of vinylidene fluoride.

In preferred form, the PVdF constituent is a homopolymer of vinylidene fluoride, for example, as sold by Atochem North America, Inc. under the trademark KYNAR 730.

The PVdF resin has good weathering characteristics, that is, the resin is capable of retaining its chemical and/or physical properties when subjected to outdoor conditions which typically include exposure to: the rays of the sun; elevated temperatures of 80-90°F or more; temperatures below freezing; relatively rapid fluctuations in temperature; and to rain, snow, sleet. It is believed that the PVdF functions to improve the chemical resistance of the composition and allows the impact resistance of the composition to be improved via the use of the hard core impact modifier while imparting transparent properties to the composition. The PVdF also functions to improve the low-temperature impact strength of the composition.

The matrix portion includes also polymerized methyl methacrylate homo- or copolymer, preferably wherein the $(C_1-C_4)$-alkyl acrylate units are present in minor amount and are, more preferably, methyl or ethyl acrylate, most preferably ethyl acrylate units. The copolymer can comprise from about 85 to about 99.9 wt.% of methyl methacrylate and from about 0.1 to about 15 wt.% of alkyl acrylate. Preferably, the alkyl acrylate content of the copolymer is from about 1 to about 13 wt.%, and most preferably from about 2 to about 9 wt.%, with the balance of the copolymer comprising methyl methacrylate.

An increase in the alkyl acrylate content of the copolymer increases the melt flow index and decreases the melt viscosity of the copolymer, as well as the resin composition of which it is a part. Minimizing the alkyl acrylate content also increases the hardness, the scratch resistance, and the resistance to attack on the capstock by chemicals.

The molecular weight of the methacrylic matrix resin is at least about 80,000 daltons. It can be as high as 130,000 daltons or even higher. Preferably, the molecular weight is from about 90,000 to about 120,000, and most preferably it is from about 100,000 to about 115,000 daltons. Increasing the molecular weight of the copolymer, all else being the same, decreases the melt flow index and increases the melt viscosity of the copolymer and the resin composition of which it is a part. Increasing the molecular weight also improves the chemical resistance and tensile properties of the composition. A mixture of different methacrylic resins can be used in the composition.

In general, the methacrylic copolymer is a random copolymer which is advantageously prepared via free radical-catalyzed bulk polymerization of a mixture of the two monomers, in a continuous flow, stirred tank reactor, with an organic peroxide to about 50% conversion. The polymer-monomer mixture is pumped to a devolatilizing twin-screw extruder where residual monomer is removed and other additives can be added. The technique for conducting this polymerization is well known. The random copolymer can be prepared also by bulk casting, or by suspension or emulsion polymerization. The emulsion-prepared copolymer can be isolated by spray drying or coagulation, washing, and drying, or by coagulation, washing and extrusion devolatilization to pellets.

The methacrylic resin portion of the matrix imparts good weathering characteristics to the composition and renders it adhesive to surfaces of PVC and surfaces of acrylonitrile/butadiene/styrene copolymer. The methacrylic resin is miscible with the PVdF constituent of the matrix phase of the composition. By "miscible" we mean that the methacrylic resin can form with PVdF a molecular mixture which is microscopically homogeneous, for example, a uniform blend that is characterized by the absence of microscopic regions or domains which are rich in the individual species of resins. Such uniform blends of resins are characterized by having a glass transition temperature which is intermediate the glass transition temperatures of the individual species of resins. Thus, the glass transition temperatures of the individual species of resins are not detectable using conventional techniques such as differential scanning, calorimetry or dynamic mechanical analysis.

## Impact Modifier Resin

In addition to a thermoplastic matrix portion, the composition of the invention also includes hard core impact modifier which comprises which comprises particles of acrylate-based, multi-layered resins or polymers in which the central or innermost portion of the multi-layered resin (referred to as the "core") is sheathed successively with one or more resin layers or shells. Such multi-layered resins are typically prepared by multi-stage sequentially polymerizations.

In general the structure of a hard core modifier typically includes a core comprising non-elastomeric polymer or copolymer which is crosslinked and/or graftlinked and whose glass transition temperature generally is above room temperature (25°C), usually above 40°C. Examples of monomers used in major amounts in the preparation of hard core polymers include styrene, alkyl styrenes, and $(C_1$ to $C_4)$-alkyl methacrylate, with other monomers usually used in minor amounts.

The hard core modifier functions primarily to enhance the physical properties of the composition, for example, toughness and impact resistance and also improves resistance to stress whitening and fading due to weathering. The preparation, blending and use of such resins are well known.

The preferred type of hard core modifier for use in the practice of the present invention is described in the aforementioned U.S.-A-3,793,402, which describes a modifier resin comprising multi-layered polymeric particles prepared by multiple stage sequential polymerizations, comprising at least three sequential stages of non-elastomeric first stage polymer, an elastomeric second stage polymer and relatively hard third stage polymer, with the monomers (comonomers) used in preparing each stage of the resin being selected, to provide stages or layers that have the aforementioned non-elastomeric, elastomeric, and hard properties. The non-elastomeric polymer formed in the first stage of polymerization has a glass transition temperature of greater than about 25°C, and it is linked to an elastomeric polymer prepared in a subsequent stage from monomeric constituents such that the glass transition temperature thereof is about 25°C or less, preferably less than about 10°C and such elastomeric polymer is in turn linked to a polymer prepared in a subsequent stage from monomers such that the glass transition temperature of the polymer is preferably greater than about 25°C, and most preferably at least about 60°C.

Preferred particles are those in which the core layer and the outer layer are linked by allyl methacrylate graft-linking monomer and in which the core layer and the outer layer comprise resins which are made from the same monomer(s) that are used to prepare the preferred acrylic matrix resin of the composition, that is, homopolymers of methyl methacrylate or random copolymers of methyl methacrylate and ($C_1$ to $C_4$)-alkyl acrylate, most preferably ethyl acrylate, and optionally, polyfunctional cross-linking monomer. When the matrix resin comprises a copolymer of methyl methacrylate and ethyl acrylate, it is highly preferred that each of the core layer and the outer layer of the particles comprise about 96 wt.% of methyl methacrylate and about 4 wt.% of ethyl acrylate, with the graft-linking monomer of the core layer comprising about 1 wt%. Various types of monomers can be used to prepare the intermediate layer of the particles. An exemplary intermediate layer comprises a random copolymer of butyl acrylate, styrene, and about 2 wt.% of the cross-linking and graft-linking monomers.

The product of the sequential stage polymerization comprises a latex, that is, an aqueous composition containing dispersed therein the multi-layered polymeric particles. The particles can be recovered from the latex by spray drying or by coagulation and drying. Spray drying can be advantageously carried out in the presence of a drying aid, for example, an acrylate-based resin which can be the same as or different from the matrix resin described herein. The "drying-aid" resin should, of course, be compatible with the other constituents of the resin composition and not affect adversely the chemical, physical, or aesthetic properties of the composition or articles made therefrom. A preferred "drying-aid" resin comprises a random copolymer of methyl methacrylate and ($C_1$ to $C_4$)-alkyl acrylate which includes from about 90 to about 99.9 wt.% of the methyl methacrylate and from about 0.1 to about 10 wt.% of the acrylate, preferably ethyl acrylate. The molecular weight of the copolymer can vary widely , for example, from about 95,000 to about 200,000 daltons. The molecular weight is preferably from about 95,000 to about 110,000 daltons. This resin can remain with the particles where it serves to function as a portion of the acrylic matrix resin.

Indeed, other thermoplastic acrylic-based resins can also be included in the composition for the purpose of achieving desired effects or functioning as processing aids, for example, high molecular weight methyl methacrylate-ethyl acrylate copolymers having a molecular weight of at least about 1,000,000.

Other types of acrylate-based, hard core impact-modifier resins can be used in the composition of the present invention, instead of or as well as the preferred resin such as described in US-A-3793402. Such resins, which function to increase the impact resistance of articles made from the composition, are multi-layered polymeric particles which are prepared by multiple stage sequential polymerization and which include a hard (non-elastomeric) core comprising preferably a major amount of a homopolymer of methyl methacrylate or a copolymer of methyl methacrylate and an alkyl acrylate. Examples of such hard core, impact modifier resins are disclosed in U.S.-A-4,052,525 and 4,433,103, Japanese Kokai 58-180514, and EP-A-270,865.

Other Aspects of the Invention

It is believed that the compositions of the present invention will be used most widely as capstock in a composite in which the ply which underlies the capstock is PVC, including chlorinated PVC and homopolymers and copolymers of vinyl chloride. By "poly(vinyl chloride) resin" or "PVC", we mean vinyl chloride homopolymer or copolymer containing more than 50 wt % of vinyl chloride units and we include chlorinated PVC. Thus, the PVC substrate can be poly(vinyl chloride) or a copolymer of vinyl chloride and one or more other monomers, for example, vinyl acetate and the like, vinylidene halides such as vinylidene chloride, alkyl esters of carboxylic acids such as acrylic acid, ethyl acrylate, 2-ethylhexyl acrylate and the like, unsaturated hydrocarbons such as ethylene, propylene, isobutylene and the like, allyl compounds such as allyl acetate and the like. In the use of a copolymer of vinyl chloride, it is preferred that the vinyl chloride content comprise at least about 80 wt.% of the copolymer. The PVC substrate can comprise a mixture of a homopolymer and one or more copolymers of vinyl chloride and/or a chlorinated PVC or a mixture of two or more copolymers of vinyl chloride and/or a chlorinated PVC. It is believed that the majority of applications will involve the use of a homopolymer of vinyl chloride.

5

For use as capstock for rigid PVC siding, it is preferred that the composition comprise from about 7 to about 9 wt.% of PVdF, from about 30 to about 33 wt.% of the methacrylic resin, and from about 58 to about 62 wt.% of the hard core, impact-modifier resin.

The capstock of the invention can be used to impart desired properties to other structural plastics, including, for example, plastics prepared from other vinyl halide polymers, acrylic resins, acrylonitrile/butadiene/styrene (ABS) resins, polystyrenes, a blend of ABS and PVC, a blend of PVC and an acrylic-imide copolymer, such as a methacrylic/glutarimide copolymer or an acrylic/maleimide copolymer; polyolefins such as polypropylene; styrene/(meth)acrylic and (meth)acrylic multistage polymers; polyamides, polyamide-multistage polymer blends, such as polyamide/ABS; polyamide/polycarbonate blends; styrene/acrylonitrile copolymers and styrene/acrylonitrile - multistage polymer blends; ethylene/propylene/diene rubber blends with styrene/acrylonitrile copolymers or with polypropylene; alpha-methylstyrene/acrylonitrile, alpha-methylstyrene/styrene/acrylonitrile, alpha-methylstyrene/methyl methacrylate/ethyl acrylate; polycarbonate, polycarbonate-ABS blends, polycarbonate-multistage polymer blends; polyesters such as polyethylene terephthalate, polybutylene terephthalate, polybutylene terephthalate-polycarbonate blends, polybutylene terephthalate-polycarbonate blends, polybutylene terephthalate-multistage polymer blends, polybutylene terephthalate/polytetrahydrofuran, polyvinyl chloride-multistage polymer blends, polyvinyl chloride-(meth)acrylate blends, chlorinated polyvinyl chloride, acrylonitrile/(meth)acrylate-multistage polymer blends, acrylonitrile/(meth)acrylate/styrene, polycaprolactone, polyarylate, poly(meth)acrylates, polyacetal, high impact polystyrenes, styrene/maleic anhydride, styrene/maleimide, polyvinylidene fluoride, polyvinylidene fluoride-multistage polymer blends, cellulosics, polyamideimide, polyetherester, polyetheresteramide and polyetheramide, polyphenylene oxides, polysulfones. Blends may be prepared from other polymer systems including polyphenylene sulfide, polyphenylene oxide, polysulfone, polyphenylene oxide styrene blends, polyphenylene oxide-high impact polystyrene blends, polyvinylidene chloride, polyvinylidene chloride/(meth)acrylontrile, polyvinylidene chloride/(meth) acrylate, polyvinyl acetate, polyetheretherketone, polyetherimide, thermoplastic polyimides, polyolefins such as polyethylene, polypropylene, and copolyolefins, and other polymer types. Random or block copolymers which combine the different functionalities can also be used, and ternary or higher blends can be made from combinations of any of these polymer types for use as substrates with the capstocks of this invention. (In the above copolymer examples, and as used generally in the art, the slash mark ("/") is employed to indicate the copolymers so described as resulting from the copolymerization of their components. Blends and mixtures, on the other hand, normally are stated as such. Also, the term "(meth) " as applied, for example, in "(meth)acrylic," is a convention widely used in the art which denotes "acrylic or methacrylic.") Thus, a wide variety of structural plastics, typically referred to in the art as "rigid thermoplastics," may be used as an underlying layer, or substrate, with the capstocks of the invention. These structural plastics can be used singly as the structural plastic with the capstocks of this invention or they also may be used more than singly or also in a blend of two or more polymers or copolymers to form a structural plastic blend. Then more than one substrate layer is used, an adhesive (or "tie") layer also may be used. The polymers and structural plastics and blends may contain acrylic or (meth)acrylic/butadiene/styrene ("MBS") or ethylene /propylene/ diene ("EPDM") polymer impact modifiers. They also may incorporate fillers described herein below. The capstock of the invention also can be used as a surfacing material for foamed plastic, for example, foamed PVC and foamed ABS.

Of the various structural plastics mentioned immediately above, it is expected that the composition of the present invention will be used widely with ABS. Typical processing temperatures for ABS include temperatures up to about 500°F. The excellent heat-resistant characteristics of the composition of the present invention permit it to be used as capstock for ABS in a coextrusion application or other molding or extrusion application. Examples of articles comprising ABS and capstock of the present invention include: sanitary ware goods such as bathtubs and sinks; vehicle body parts such as pick-up truck caps, and hoods and fenders for farm vehicles; boat parts; and thermoformed sign letters.

For use as capstock for PVC, the composition is opaque to UV light and visible light (<520 nm). Species of compositions within the scope of this invention are opaque (for example, at least 95% opaque to light). As may be needed, opacifiers and/or pigments are added to the composition to render them opaque. For use as capstock for ABS, the composition is opaque to UV light and preferably also to visible light.

It should be understood that the composition of the present invention can be used in an application in which the composition is not compatible with an underlying structural plastic material such as, for example, a polyolefin or a polystyrene. A composite of this type can be made effectively by including between the capstock and structural plastic a mutually compatible adhesive which adheres the incompatible materials together.

The resin composition of the present invention can be extruded, molded, formed, or pressed into monolithic sheets or films, including capstock, using conventional equipment. The composition can also be formed according to conventional techniques. Structural plastics can be capped with the aforesaid resin composition by employing standard lamination or coextrusion techniques and equipment such as press lamination, bi-extrusion, and co-calendering; solution casting methods also may be used to provide laminated materials of the invention.

It is preferred to form sheet and sheet-like composites of the present invention by the use of feedblock coextrusion. By "feedblock coextrusion," we mean a process in which each of a resin supply of a first plastic material (for example, a structural plastic material) and a resin supply of a second plastic material (for example, a capstock material) is heated to a molten condition as separated streams thereof are fed to a feedblock in which the streams are brought together in face to face surface contact to form a two-ply stream which in turn is fed to a sheet die in which the two-ply stream is spread laterally into a two-ply sheet under conditions of laminar flow, with the molten resin plies of the sheet being in face to face surface contact as they emerge from the die, the shaped two-ply sheet thereafter being cooled and solidified, the resultant composite comprising each of the plies of the sheet integrally bonded to each other by the solidified resins comprising the sheet. Feedblock coextrusion is known can be used to produce a sheet of more than two plies by use of a feedblock which is designed to accomodate more than two streams of resin or a feedblock which splits two streams of resin and recombines them in multiple alternating layers.

To form a laminated technical profile comprising capstock of the present invention and a structural plastic substrate, it is preferred to use a multiple manifold profile coextrusion die. Such dies are provided with separate supply ports and manifolds for the capstock and structural plastic melt streams. This permits shaping of the structural plastic melt into the desired profile shape and then accurately applying capstock to the desired outer surfaces. This composite is then subsequently cooled in a calibrator assembly which maintains the shape thereof until it is solidified.

Additional examples of uses for the capstock compositions of this invention include automotive applications such as decorative exterior trim, molding side trim and quarter panel trim panels, fender extensions, louvers, rear end panels, pickup caps, rearview mirror housings, instrument knobs, snap-on and other fasteners for interior or exterior trim, accessories for trucks, buses, campers, vans, and mass-transit vehicles, b-pillar extensions, and the like; appliances and tools such as lawn and garden implements and fencing, bathroom fixtures for mobile homes, components of pleasure boats, exterior components of mobile homes, lawn furniture such as chair and table frames, pipe and pipe end caps, luggage, shower stalls for mobile homes, toilet seats, signs, spas, air conditioner and heat pump components, kitchen housewares, bead-molded picnic coolers, picnic trays and jugs, and trash cans; venetian blind components; sporting goods such as sailboards, sailboats, water skis; plumbing parts such as lavatory parts and the like; construction components, in addition to those mentioned previously, the additional components including architectural moldings, door molding, louvers, and shutters, mobile home skirting, patio doors, siding accessories, window cladding, storm window frames, skylight frames, end caps for gutters, awnings and car port roofs, and the like. This list exemplifies the types of applications and uses of the capstocked materials of this invention.

Optional ingredients that can be used in the composition of the present invention are color concentrates, for example, dyes and pigments, lubricants, UV stabilizers, thermal stabilizers, antioxidants, heat distortion temperature improvers, antistatic agents, matting agents, flame retardants, and processing aids. In general, the total amount of such optional ingredients will generally not exceed about 15 wt.% of the capstock composition weight, for example, about 1 to about 15 wt.% of such ingredients. The optional ingredients may be used in the capstock composition, the structural plastic, or in both. Additionally, fillers such as wood fibers, carbon fibers, and glass fibers and the like may be optionally included in the composition of the present invention, although these particular fillers would be expected to be poorly resistant to weathering. Additionally, glass beads and minerals such as calcium carbonate, talc, titanium dioxide, barium sulfate, and the like also may be optionally included in the composition of the present invention. In general, the total amount of such optional fillers will not exceed about 15 weight percent in the capstock and about 65 weight percent in the structural plastic or substrate.

The following examples are illustrative of the invention

## Examples

The composition of Example 1 comprises a mixture of matrix resins and a hard core, impact-modifier resin.

## Example 1

The composition of Example 1 includes a mixture of two different methacrylic matrix resins designated (A) and (B) below.

Matrix Resins

(A) This methacrylic resin is a random copolymer of 96 wt.% methyl methacrylate and 4 wt.% ethyl acrylate having a molecular weight of about 115,000 daltsons. The copolymer is prepared in a continuous flow, stirred tank reactor in the presence of an organic peroxide.

(B) This methacrylic resin is also a random copolymer of 96 wt.% methyl methacrylate and 4 wt.% ethyl acrylate having a molecular weight of about 115,000 daltons, but, the copolymer is prepared by emulsion polymerization, first by forming a seed in situ and then by forming the rest of the polymer by a semi-continuous process.

The PVdF resin for use in the composition of Example 1 is a homopolymer of vinylidene fluoride and has a molecular weight of about 13,000 to about 17,000 poise, as measured by ASTM D-3835 (230°C and 100 reciprocal seconds).

The impact-modifier resin for use in the composition of Example 1 is as follows.

Hard Core, Impact-Modifier Resin

The modifier resin comprises polymeric particles having three layers and is prepared by the multiple-stage, sequential procedure described in aforementioned U.S. Patent No. 3,793,402. The core layer and outer layer each comprise random copolymers of approximately 96 wt.% methyl methacrylate and 4 wt.% ethyl acrylate, with the core layer copolymer graft-linked with 0.2 wt.% allyl methacrylate. The intermediate layer is a random copolymer of about 82 wt.% butyl acrylate and 18 wt.% styrene, graft-linked with about 1 wt.% allyl methacrylate. The proportions of the core, intermediate, and outer layers is approximately 35%, 45%, and 20%, respectively. The modifier resin has a particle size of from about 250 to about 350 nanometers.

Blending of the Resin Constituents

The resin constituents described above are blended in the manner described hereinbelow to provide the composition of Example 1 which comprises the following ingredients in the amounts indicated.

## Composition of Example 1

| Ingredients | wt.% |
| --- | --- |
| MMA/EA resin (A) | 17 |
| MMA/EA resin (B) | 15 |
| hard core, impact-modifier resin | 60 |
| PVdF | 8 |

In preparing the composition of Example 1, a mixture of matrix resin (B) and the hard core, impact-modifier resin are first prepared. The mixture is prepared by combining 20 wt.% of a latex containing 50 wt.% of the resin of (B) above with 80 wt.% of a latex containing 50 wt.% of the impact-modifier resin in a vessel equipped with a stirrer and blending to homogeneity. The blend is spray dried and isolated as a free-flowing powder. Sixty parts by weight of this mixture are mixed manually with 27.2 parts by weight of matrix resin (A) and 12.8 parts by weight of PVdF. This composition is melt blended in a conventional extruder and extruded to pellets. The pellets are combined with the aforementioned mixture of matrix resin (B) and modifier (20 wt.% resin (B)/80 wt.% modifier) at a 63.94/36.06 weight ratio in a polyethylene bag where they are mixed by manual agitation. The dryblend is then fed to a single screw extruder (25 mm diameter by 600 mm effective screw length) for melting and dispersive mixing. The barrel zones and die zone are controlled at 196°C, with the melt extruded as a strand, cooled in water, and pelletized.

As an exemplary alternative to use of the above described formulating method, the latex of each of the modifier and the methacrylic resin and PVdF can be blended and isolated by coagulation, dewatered, devolatilized and pelletized. other techniques can also be used to prepare the composition.

The composition of the following examples are prepared utilizing different proportions of ingredients as described hereinbelow. The compositions, which are prepared in the form of pellets, comprise the following.

Example 2

## Composition of Example 2

| Ingredients | wt.% |
|---|---|
| MMA/EA matrix resin (A) | 19.1 |
| MMA/EA matrix resin (B) | 16.9 |
| hard core, impact-modifier resin | 60 |
| PVdF | 4 |

Example 3

## Composition of Example 3

| Ingredients | wt.% |
|---|---|
| MMA/EA matrix resin (A) | 25.4 |
| MMA/EA matrix resin (B) | 22.6 |
| hard core, impact-modifier resin | 40 |
| PVdF | 12 |

Example 4

## Composition of Example 4

| Ingredients | wt.% |
|---|---|
| MMA/EA matrix resin (A) | 28.6 |
| MMA/EA matrix resin (B) | 25.4 |
| hard core, impact-modifier resin | 40 |
| PVdF | 6 |

To each of the compositions of Examples 1 to 4 is added a brown concentrate comprising 21.8 wt.% of brown pigment (Chromophthal 5R of Ciba Geigy Co.), 7.2 wt.% of violet dyes, and 71 wt.% of an acrylate resin dispersion aid. The concentrate is added on the basis of 4 parts by weight of concentrate per 100 parts by weight of each of the compositions of Examples 1 to 4. The resulting compositions are used as capstocks over PVC resin substrates, each of which is composed of the following ingredients.

| Ingredients of PVC Structural Plastic | Amounts, phr |
|---|---|
| PVC, K69 (Geon 103EPF76) | 100 |
| soft core, impact-modifier resin (KM-334 of Rohm and Haas Co.) | 5 |
| $TiO_2$ pigment | 4 |
| $CaCO_3$ filler | 5 |
| lubricant mixture-1.9 phr calcium stearate, 1.3 phr paraffin wax, & 0.3 phr of vinyl acrylate resin | 3.5 |
| tin mercaptide stabilizer | 1.1 |
| acrylic processing-aid resin | 0.5 |

The composition described above is prepared by blending the ingredients in a high intensity mixer.

Composites are formed from the PVC structural plastic composition and the capstock compositions of Examples 1 to 4 utilizing conventional feedblock coextrusion. Appropriate charges are made to the hoppers of separate extruders. The extruder for the PVC structural plastic composition is a 25 mm conical counter-rotating twin screw extruder. The extruder for the capstock compositions is a 25 mm single screw extruder. Convergence of the melt streams is effected by a feedblock that has a 3.2 mm by 3.2 mm orifice vertically centered over the melt stream from the extruder for the structural plastic composition in the die, through which the capstock composition flows and distributes onto a conventional three-roll stack polishing unit, cooling rack and pull rolls.

The feedblock temperature is 320-350°F and the die temperature 350-380°F. The temperatures associated with the extruder for the capstock compositions are as follows.

| Capstock Composition | Melt Temp., °F | Barrel Temperatures, °F | | |
|---|---|---|---|---|
| | | Zone 1 | Zone 2 | Zone 3 |
| Exs. 1, 2, 3 & 4 | 400 | 370 | 372 | 380 |

The extruded composites have capstock thicknesses of about 5 to about 10 mils (0.125 to 0.25 mm) and the thicknesses of the PVC structural plastic plies are from about 30 to about 35 mils (0.76 to 0.90 mm), with the composites being about 40 to about 45 mil (1.0 to 1.14 mm) in total thickness. Such composites are typical of materials used in the residential siding industry. (For ABS coextrusion, capstock thickness of 15 to 20 mils (0.4 to 0.5 mm) over 80 to 85 mils (2.0 to 2.16 mm) of ABS is used to simulate the thickness of representative thermoformed parts.)

Table 1 below shows the impact strengths of samples of the composites of the capstock/PVC substrates for those composites which include the capstock compositions of Examples 1 to 4.

## Table 1

| Capstock Composition | Impact (ASTM D 4226A-85), Joules/mm |
|---|---|
| Ex. 1 | 8.9 (sigma 1.25) |
| Ex. 1 (run 2) | 9.7 (sigma 1.0) |
| Ex. 2 | 6.6 (sigma 0.6) |
| Ex. 3 | 7.6 (sigma 0.5) |
| Ex. 4 | 5.2 (sigma 0.25) |

PVC substrates (without capstock) yield values typically in the range of about 10 to 14 Joules per millimeter thickness. The impact strength values reported in Table 1 above are high enough to be suitable for a broad range of applications such as, for example, window profiles, rain gutters, etc. The present standard in the industry for residential PVC siding is an impact strength of at least 9 Joules/mm. This is achieved by use of the composition of Example 1 which contains relatively high levels of both PVdF and impact-modifier.

Table 2 below shows characteristics of color retention for a composite which is exemplary of this invention utilizing the capstock composition identified in Table 1. Specimens of the co-extruded capstock/PVC substrate composite are tested by the Xenon Arc/Weathering Test methods described in ASTM Method G 2677, with water cycles. Differences in total color change (Delta E) are calculated by the procedures of ASTM Method D 2244.

## Table 2

| Capstock Composition | Change in Total Color (Delta E) in Xenon Arc, with Weathering (ASTM G 2677), after Hours Stated | | | |
|---|---|---|---|---|
| | 500 | 2000 | 3500 | 5000 |
| Ex. 1 | 1.93 | 1.70 | 2.36 | 3.48 |

PVC-based and other capstock materials such as Luran S (an acrylate/styrene/acrylonitrile copolymer of BASF, S-797SE), Rovel (an acrylonitrile/EPDM/styrene copolymer of Dow Chemical Co., XU-74053.02), Duracap (a semi-rigid PVC of BF Goodrich Co.), and Geloy (an acylate/styrene/acrylonitrile copolymer/PVC blend of General Electric Co.) exhibit Delta E values within the range of 1.8 to 6.46 after 2000 hrs., 4.8 to 10.5 after 4000 hrs., and 4.4 to 10.26 after 5000 hrs.

Table 3 below shows the percent retention of original impact strength of the capstock alloy of Example 1 over PVC after weatherometer exposure (ASTM 2677). Chip impact is measured according to ASTM Method D-4508.

## Table 3

| Capstock Composition | Percent Impact Strength Retained after Weathering (ASTM 2677) for Hours Indicated | | | |
| --- | --- | --- | --- | --- |
| | 500 | 2000 | 3500 | 5000 |
| Ex. 1 | 95.6 | 51.5 | 17.2 | 12.1 |

Uncapped PVC and other capstock materials such as Luran S, Rovel, Duracap, and Geloy exhibit impact retention values within the range of 10.4 to 30% after 2000 hours, 9.4 to 24.5% after 4000 hours, and 8.75 to 21.7% after 5000 hours.

Example 5 below is another example of a composition within the scope of the present invention.

## Composition of Example 5

| Ingredients | wt.% |
| --- | --- |
| MMA/EA | 54 |
| PVdF | 6 |
| hard core, impact-modifier resin | 40 |

The MMA/EA resin of Example 5 comprises about 97 wt.% methyl methacrylate and about 3 wt.% ethyl acrylate and has a molecular weight of about 150,000. The impact-modifier resin is like that of Example 1. The PVdF has a molecular weight of about 8000 to about 11,000 poise.

The composition is prepared using a two-roll mill. The constituents are milled for 3 minutes at 450°F and compression molded into 0.125" thick plaques in a Carver press at 5000 psi for 3 minutes followed by 20,000 psi for 2 minutes. The plaques are cooled and evaluated for impact properties without annealing. Evaluation shows a notched Izod of 1.1 ft. lbs/in.

In summary, it can be said that the present invention provides a composition which is capable of being used effectively as capstock having excellent properties, including particularly, excellent weather-resistant properties and chemical resistance.

## Claims

1. A resinous composition comprising: (1) a matrix portion which comprises (a) from 3 to 12 parts by wt. of vinylidene fluoride homopolymer or copolymer and (b) from 25 to 55 parts by wt. of thermoplastic methacrylic resin having a molecular weight of at least 80,000 daltons and selected from the group consisting of poly(methyl methacrylate) and copolymers of methyl methacrylate and ($C_1$ to $C_4$)-alkyl acrylate; and (2) from 40 to 65 parts by wt. of discrete particles of acrylate-based, hard core, impact modifier resin; wherein the resins of (1)(a) and (1)(b) constitute a continuous phase of the composition in which are dispersed the particles, (2) the total amount of 1 (a) plus 1 (b) plus 2 being 100 parts by weight.

2. A composition as claimed in Claim 1 comprising:
   (A) from 35 to 45 wt.% (of A plus B) of a matrix portion comprising:
      (1) from 15 to 25 wt.% (of A1 plus B1) of poly(vinylidene fluoride) resin (PVdF); and
      (2) from 75 to 85 wt.% (of A1 plus B1) of thermoplastic methacrylic resin having a molecular weight of at least 80,000 daltons, and selected from the group consisting of poly(methyl methacrylate) resin and copolymers of methyl methacrylate and ($C_1$ to $C_4$)-alkyl acrylate; and
   (B) from 55 to 65 wt. % (of A plus B) of acrylate-based, hard core, impact-modifier resin in the form of discrete particles;
   wherein the resins of(A)(1) and (A)(2) above constitute a continuous phase of said composition in which are dispersed the resin particles of (B).

3. A composition as claimed in Claim 2 wherein the methacrylic resin comprises copolymer containing 0.1 to 15, preferably 1 to 13, more preferably 2 to 9, wt.% of units of said alkyl acrylate, most preferably ethyl acrylate, and 85 to 99.9, preferably 87 to 99, more preferably 91 to 98 wt.% of units of said methyl methacrylate.

4. A composition according to any preceding Claim wherein said molecular weight is no greater than 130,000 daltons, preferably from 90,000 to 120,000 daltons, more preferably from 100,000 to 115,000 daltons.

5. A composition as claimed in any preceding Claim wherein said impact-modifier resin comprises particles of multi-layered polymer having at least one elastomeric intermediate layer sandwiched between non-elastomeric core and hard outer layers.

6. A composition as claimed in Claim 5 wherein each of the core and outer layers comprises random copolymer containing units of methyl methacrylate and ethyl acrylate and the intermediate layer comprises random copolymer containing units of butyl acrylate and styrene.

7. A composition according to Claim 2 comprising 7 to 9 parts by weight of said PVdF, from 30 to 33 wt.% of said methacrylic resin, and from 58 to 62 wt.% of said impact-modifier resin.

8. A composition according to any preceding Claim wherein said PVdF comprises vinylidene fluoride homopolymer.

9. Capstock made from the composition of any preceding Claim.

10. A composite comprising a laminate in which capstock as claimed in Claim 9 (a) overlies acrylic/butadiene/styrene (ABS) structural plastic or (b) overlies PVC structural plastic and is opaque.

11. A composite formed by feedblock coextrusion or multi-manifold coextrusion and including a ply formed from a composition as claimed in any of Claims 1 to 8, said composite optionally being in the form of siding, rain gutter or shutter, or window frame or door frame or other technical profile, especially in the form of rigid PVC siding having its exterior surface covered with capstock formed from a composition as claimed in any of Claims 1 to 8.

12. A method for forming a laminate which comprises subject a composition as claimed in any of Claims 1 to 8 and a material comprising a structural plastic, preferably of PVC or ABS resin, to feedblock coextrusion or multi-manifold coextrusion.

13. A shaped article formed from resinous composition as claimed in any of Claims 1 to 8 or a composite as claimed in Claim 10.